# EUROPEAN PATENT APPLICATION

(11) **EP 4 160 454 A1**
(43) Date of publication of application: **05.04.2023**
(21) Application number: 22195871.3
(22) Date of filing: 15.09.2022
(51) Int. Cl.: G06F 21/55, G06F 21/52, G06F 21/56, G06F 21/44

(54) **COMPUTER-IMPLEMENTED SYSTEMS AND METHODS FOR APPLICATION IDENTIFICATION AND AUTHENTICATION**

(30) Priority: 30.09.2021 US 202117490288; 30.09.2021 US 202117490711
(71) Applicant: CyberArk Software Ltd., 4951040 Petach-Tikva (IL)
(72) Inventor: HECHT, Asaf, Tel Aviv (IL)
(74) Representative: Finnegan Europe LLP

(57) **Abstract**

A computer-implemented system is provided that includes instructions that, when executed by at least one processor, cause the at least one processor to perform operations for generating unique sequencing profiles for applications, the operations comprising: identifying a code element of an application; identifying a plurality of application programming interface (API) calls associated with the code element; determining a unique sequencing profile for the code element, the unique sequencing profile being based on at least one of: a hierarchy of the plurality of API calls, or an execution timing length for the plurality of API calls; and assigning, based on the unique sequencing profile for the code element, a unique sequencing profile to the application.

## Description

### TECHNICAL FIELD

The present disclosure relates generally to the field of software security and computer-implemented systems and methods for software authentication. More specifically, and without limitation, this disclosure relates to systems, methods, and computer-readable media for utilizing unique sequencing profiles that uniquely identify applications. The systems and methods disclosed herein may be used in various applications, including in security of software applications, scripts, and automation tools. For example, the systems and methods disclosed herein may be implemented to provide real-time authentication of software applications to prevent a cyberattack on a computer system, a computer network, a personal computer device, an loT device, or the like.

### BACKGROUND

Modern network environments are complex, often including numerous individual applications and requiring multiple cross-platform and cross-organizational exchanges of data. As a result, when analyzing a network environment, it may be difficult to determine the authenticity of a portion of code being sent to or from, or generated within, the environment. For example, it may be difficult to determine if a portion of code has been maliciously altered by a bad actor, or whether the portion of code will function to perform an intended result. Similarly, it may be difficult to determine whether a portion of code should be granted access to specific network resources without compromising the security or integrity of a system.

Various network security techniques have heretofore been developed, but they suffer from one or more technical disadvantages and drawbacks. For example, extant solutions fail to provide a way to authenticate individual portions of code. Additionally, extant systems and methods fail to define a code identity in an objective and consistent manner. Furthermore, extant systems and methods fail to analyze software applications to ensure functionality and security in a real-time manner.

Therefore, there is a need for improvements in software authentication in network environments. Among other things, there is a need for providing a consistent and efficient way of identifying and authenticating portions of code. Computer-implemented systems and methods are also needed for analyzing the functionality and composition of software applications. The needed technical solutions should be highly scalable and at the same time dynamic and customizable. Embodiments of the present disclosure provide such improvements and can address one or more of the above-noted technical drawbacks and disadvantages of extant solutions.

### SUMMARY

The claimed invention is defined by the appended independent claims. Embodiments of the present disclosure include systems, methods, and computer-readable media for software authentication. Consistent with some disclosed embodiments, systems, methods, and computer-readable media are provided for utilizing unique sequencing profiles that uniquely identify applications. Embodiments of the present disclosure also relate to systems and methods for identifying and authenticating portions of code. These and other embodiments, features, and implementations are described herein.

Consistent with the present disclosure, a system of one or more computers can be configured to perform operations or actions by virtue of having software, firmware, hardware, or a combination of them installed for the system that in operation causes or cause the system to perform those operations or actions. One or more computer programs can be configured to perform operations or actions by virtue of including instructions that, when executed by data processing apparatus (such as one or more processors), cause the apparatus to perform such operations or actions.

One general aspect includes a computer-implemented method for generating unique sequencing profiles for applications, the method comprising: identifying a code element of an application; identifying a plurality of application programming interface, API, calls associated with the code element; determining a unique sequencing profile for the code element, the unique sequencing profile being based on at least one of: an order or hierarchy of the plurality of API calls, or execution timing data for the plurality of API calls, such as execution timing length for the plurality of API calls; and assigning, based on the unique sequencing profile for the code element, a unique sequencing profile to the application.

Implementations may include one or more of the following features. The method may comprise storing the unique sequencing profile assigned to the application for future analysis. The method may comprise identifying a new code element of a new application; assigning a new unique sequencing profile to the new application; comparing the new unique sequencing profile of the new application to the stored unique sequencing profile; and determining, based on the comparison, a security score for the new application. The method may comprise performing, based on determining the security score, at least one of: terminating the new application, suspending execution of the new application, adding privileges of the new application, or removing privileges of the new application. The method may comprise
performing, based on determining the security score, at least one of: authenticating the new application, authorizing the new application, monitoring the new application, or auditing the new application. The method may comprise performing, based on determining the security score, at least one of: generating a report or generating an alert identifying the new application. The method may comprise regenerating the unique sequencing profile of the application. The method may comprise comparing the regenerated unique sequencing profile of the application to the unique sequencing profile assigned to the application; and determining whether there is a change beyond a threshold level based on the comparing. The method may comprise performing a security operation for the application when the change is beyond the threshold level. The method may comprise identifying a plurality of code elements of the application; determining unique sequencing profiles for each of the plurality of code elements; and assigning, based on the unique sequencing profiles for each of the plurality of code elements, the unique sequencing profile to the application. The method may comprise identifying a plurality of applications in a network environment; and uniquely identifying each of the plurality of applications based on their unique sequencing profile. The execution timing data may indicate durations of execution for the plurality of API calls, or durations in between execution for the plurality of API calls. The plurality of API calls may be identified based on at least one of: static analysis of the code element or dynamic analysis of the code element. The application may be at least one of: a serverless code instance, a script, or a program. Implementations of the described techniques may include hardware, a method or process, or computer software on a computer-accessible medium.

Another general aspect includes a computer readable medium, such as a non-transitory computer readable medium, including instructions that, when executed by at least one processor, cause the at least one processor to perform operations for generating unique sequencing profiles for applications, the operations comprising: identifying a code element of an application; identifying a plurality of application programming interface (API) calls associated with the code element; determining a unique sequencing profile for the code element, the unique sequencing profile being based on at least one of: an order or hierarchy of the plurality of API calls, or execution timing data for the plurality of API calls; and assigning, based on the unique sequencing profile for the code element, a unique sequencing profile to the application. Other embodiments of this aspect include corresponding computer systems, apparatuses, and computer programs recorded on one or more computer storage devices, each configured to perform the actions of the methods.

Implementations may include one or more of the following features. The operations may further include identifying a plurality of code elements of the application; determining unique sequencing profiles for each of the plurality of code elements; and assigning, based on the unique sequencing profiles for each of the plurality of code elements, the unique sequencing profile to the application. The operations may further include identifying a plurality of applications in a network environment, and uniquely identifying each of the plurality of applications based on their unique sequencing profile. The operations may further include storing the unique sequencing profile assigned to the application for future analysis. The operations may further include identifying a new code element of a new application; assigning a new unique sequencing profile to the new application; comparing the new unique sequencing profile of the new application to the stored unique sequencing profile; and determining, based on the comparison, a security score for the new application. The operations may further include performing, based on the determining, at least one of terminating the new application or suspending execution of the new application. The operations may further include performing, based on the determining, at least one of: authenticating or authorizing the new application. The operations may further include performing, based on the determining, at least one of monitoring or auditing the new application. The operations may further include performing, based on the determining, at least one of adding or removing privileges of the new application. The operations may further include performing, based on the determining, at least one of generating a report or generating an alert identifying the new application.

Another general aspect includes a computer-implemented method for generating unique sequencing profiles for applications, the method comprising: identifying a code element of an application; identifying a plurality of application programming interface (API) calls associated with the code element; determining a unique sequencing profile for the code element, the unique sequencing profile being based on at least one of: an order or hierarchy of the plurality of API calls, or execution timing data for the plurality of API calls; and assigning, based on the unique sequencing profile for the code element, a unique sequencing profile to the application. Other embodiments of this aspect include corresponding computer systems, apparatuses, and computer programs recorded on one or more computer storage devices, each configured to perform the actions of the methods.

Implementations may include one or more of the following features. The application may be at least one of: a serverless code instance, a script, or a program. The plurality of API calls may be identified based on static analysis of the code element. The plurality of API calls may be identified based on dynamic analysis of the code element. The computer-implemented method may include regenerating the unique sequencing profile of the application. The computer-implemented method may include comparing the regenerated unique sequencing profile of the application to the unique sequencing profile assigned to the application. The computer-implemented method may include determining whether there is a change beyond a threshold level based on the comparing. The computer-implemented method may include performing a security operation for the application when the change is beyond the threshold level. The execution timing data may indicate durations of execution for the plurality of API calls. The execution timing data may indicate durations in between execution for the plurality of API calls. Implementations of the described techniques may include hardware, a method or process, or computer software on a computer-accessible medium.

Another general aspect includes a computer readable medium, such as a non-transitory computer readable medium, including instructions that, when executed by at least one processor, cause the at least one processor to perform operations for utilizing unique sequencing profiles that uniquely identify applications, the operations comprising: identifying an application having a plurality of application programming interface (API) calls associated with the application; retrieving, based on the identification of the application, a reference sequencing profile based on a plurality of code elements of the application; comparing the reference sequencing profile to a unique sequencing profile of the application, the unique sequencing profile being based on the plurality of API calls; determining, based on the comparison, a security score for the application; and performing a security action based on the security score. Other embodiments of this aspect include corresponding computer systems, apparatuses, and computer programs recorded on one or more computer storage devices, each configured to perform the actions of the methods.

Implementations may include one or more of the following features. The plurality of code elements may each include one or more API calls of the plurality of API calls. The unique sequencing profile of the application may be based on at least one of: an order or hierarchy of the plurality of API calls, or execution timing data for the plurality of API calls. The security action may be at least one of: display an alert associated with the application; authenticate the application; authorize the application; change at least one credential associated with the application; deactivate at least one credential associated with the application; require the application to authenticate using an additional factor; provide a report associated the application. The security action may be performed in real time. Comparing the reference sequencing profile to a unique sequencing profile of the application may include comparing an order, hierarchy, or execution timing data of the reference sequencing profile to the order, hierarchy, or execution timing data of the unique sequencing profile of the application. The execution timing data may indicate durations of execution for the plurality of API calls. The execution timing data may indicate durations in between execution for the plurality of API calls. The reference sequencing profile may be associated with a version of the application. The authenticating or authorizing the application may be further based on the multi-factor authentication. The operations may further include determining, based on the security score, whether to require multi-factor authentication. Implementations of the described techniques may include hardware, a method or process, or computer software on a computer-accessible medium.

Another general aspect includes a computer-implemented method for utilizing unique sequencing profiles that uniquely identify applications, the method comprising: identifying an application having a plurality of application programming interface (API) calls associated with the application; retrieving, based on the identification of the application, a reference sequencing profile; comparing the reference sequencing profile to a unique sequencing profile of the application, the unique sequencing profile being based on the plurality of API calls; determining, based on the comparison, a security score of the application; and authenticating or authorizing the application based on the security score. Other embodiments of this aspect include corresponding computer systems, apparatus, and computer programs recorded on one or more computer storage devices, each configured to perform the actions of the methods.

Implementations may include one or more of the following features. The application may be at least one of a serverless code instance, a script, or a program. The security score may indicate that the application is an authentic version. The computer-implemented method may include determining, based on the comparison, that a difference between the reference sequencing profile and the unique sequencing profile of the application is below a threshold level. Authenticating or authorizing the application may be further based on the determination that the difference is below the threshold level. The security score may indicate at least one of a change in the application or a level of potential maliciousness of the application. The computer-implemented method may include performing, based on the authenticating or authorizing of the application, at least one of executing the application or permitting execution of the application. The computer-implemented method may include performing, based on the security score, at least one of monitoring or auditing the application. The computer-implemented method may include performing, based on the security score, at least one of generating a report or generating an alert identifying the application. Implementations of the described techniques may include hardware, a method or process, or computer software on a computer-accessible medium.

Another general aspect includes a computer-implemented method for utilizing unique sequencing profiles that uniquely identify applications, the method comprising: identifying an application to be authenticated or authorized, having a plurality of application programming interface (API) calls associated with the application; identifying, based on an execution of the identified application, the plurality of API calls associated with the application; retrieving, based on the plurality of API calls, a reference sequencing profile based on a plurality of code elements of the application; retrieving a unique sequencing profile of the application, the unique sequencing profile being based on the plurality of API calls; comparing the reference sequencing profile to the unique sequencing profile of the application; determining, based on the comparison, a security score indicating a change in the application; and performing a security action based on the security score.

Implementations may include one or more of the following features. Each the plurality of code elements of the application may include one or more API calls of the plurality of API calls. The unique sequencing profile of the application may be based on at least one of: an order or hierarchy of the plurality of API calls, or execution timing data for the plurality of API calls, such as execution timing length for the plurality of API calls. Comparing the reference sequencing profile to a unique sequencing profile of the application may comprise comparing an order, hierarchy, or execution timing data of the reference sequencing profile to the order, hierarchy, or execution timing data of the unique sequencing profile of the application. The execution timing data may indicate durations of execution for the plurality of API calls or durations in between execution for the plurality of API calls. The security action may comprise at least one of: displaying an alert associated with the application; authenticating the application; authorizing the application; changing at least one credential associated with the application; deactivating at least one credential associated with the application; requiring the application to authenticate using an additional factor; providing a report associated the application. The method may comprise performing, based on the authenticating or authorizing of the application, at least one of: executing the application or permitting execution of the application. The method may comprise determining, based on the security score, whether to require multi-factor authentication. The security action may comprise authenticating or authorizing the application based on the multi-factor authentication. The method may comprise determining, based on the comparison, that a difference between the reference sequencing profile and the unique sequencing profile of the application is below a threshold level, where the security action may comprise authenticating or authorizing the application based on the determination that the difference is below the threshold level. The method may comprise performing, based on the security score, at least one of: monitoring the application, auditing the application, generating a report identifying the application, or generating an alert identifying the application. The security action is performed in real time. The reference sequencing profile may be associated with a version of the application. The application may be at least one of: a serverless code instance, a script, or a program. The security score may indicate at least one of: a change in the application, a level of potential maliciousness of the application, or that the application is an authentic version. Implementations of the described techniques may include hardware, a method or process, or computer software on a computer-accessible medium.

Systems and methods consistent with the present disclosure may be implemented using any suitable combination of software, firmware, and hardware. Implementations of the present disclosure may include programs or instructions that are machine constructed and/or programmed specifically for performing functions associated with the disclosed operations or actions. Still further, non-transitory computer-readable storage media may be used that store program instructions, which are executable by at least one processor to perform the steps and/or methods described herein.

It will be understood that the foregoing general description and the following detailed description are exemplary and explanatory only, and are not restrictive of the disclosed embodiments.

### BRIEF DESCRIPTION OF THE DRAWINGS

The following drawings which comprise a part of this specification, illustrate several embodiments of the present disclosure and, together with the description, serve to explain the principles and features of the disclosed embodiments. In the drawings:
FIG. 1 is an exemplary network environment for analyzing software applications, consistent with embodiments of the present disclosure.
FIG. 2 illustrates an example computing device which may be employed in connection with the example environment of FIG. 1 and other embodiments of the present disclosure to analyze software applications.
FIG. 3 illustrates an example method for generating unique sequencing profiles for applications, consistent with embodiments of the present disclosure.
FIG. 4 illustrates exemplary sequencing profiles, consistent with embodiments of the present disclosure.
FIG. 5 illustrates an example method for determining a security score for an application, consistent with embodiments of the present disclosure.
FIG. 6 illustrates an example method for determining whether to perform a security action, consistent with embodiments of the present disclosure.
FIG. 7 illustrates an example method for utilizing unique sequencing profiles that uniquely identify applications, consistent with embodiments of the present disclosure.
FIG. 8 illustrates another example method for utilizing unique sequencing profiles that uniquely identify applications, consistent with embodiments of the present disclosure.

### DETAILED DESCRIPTION

Example embodiments are described below with reference to the accompanying drawings. The figures are not necessarily drawn to scale. While examples and features of disclosed principles are described herein, modifications, adaptations, and other implementations are possible. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It should also be noted that as used herein and in the appended claims, the singular forms "a," "an," and "the" include plural references unless the context clearly dictates otherwise.

In the following description, various working examples are provided for illustrative purposes. However, it will be appreciated that the present disclosure may be practiced without one or more of these details.

Throughout this disclosure there are references to "embodiments," which refer to examples of inventive ideas, concepts, and/or manifestations described herein. Many related and unrelated embodiments are described throughout this disclosure. The fact that some "embodiments" are described as exhibiting a feature or characteristic does not mean that other disclosed embodiments necessarily share that feature or characteristic.

Embodiments described herein include computer-readable storage medium, such as non-transitory computer readable medium, containing instructions that when executed by at least one processor, cause the at least one processor to perform a method or set of operations. Non-transitory computer readable mediums may be any medium capable of storing data in any memory in a way that may be read by any computing device with a processor to carry out methods or any other instructions stored in the memory. The non-transitory computer readable medium may be implemented as software, firmware, hardware, or any combination thereof. Software may preferably be implemented as an application program tangibly embodied on a program storage unit or computer readable medium consisting of parts, or of certain devices and/or a combination of devices. The application program may be uploaded to, and executed by, a machine comprising any suitable architecture. Preferably, the machine may be implemented on a computer platform having hardware such as one or more central processing units ("CPUs"), a memory, and input/output interfaces. The computer platform may also include an operating system and microinstruction code. The various processes and functions described in this disclosure may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium may be any computer readable medium except for a transitory propagating signal.

The memory may include any mechanism for storing electronic data or instructions, including Random Access Memory (RAM), a Read-Only Memory (ROM), a hard disk, an optical disk, a magnetic medium, a flash memory, other permanent, fixed, volatile or non-volatile memory. The memory may include one or more separate storage devices collocated or disbursed, capable of storing data structures, instructions, or any other data. The memory may further include a memory portion containing instructions for the processor to execute. The memory may also be used as a working memory device for the processors or as a temporary storage.

Some embodiments may involve at least one processor. A processor may be any physical device or group of devices having electric circuitry that performs a logic operation on input or inputs. For example, the at least one processor may include one or more integrated circuits (IC), including application-specific integrated circuit (ASIC), microchips, microcontrollers, microprocessors, all or part of a central processing unit (CPU), graphics processing unit (GPU), digital signal processor (DSP), field-programmable gate array (FPGA), server, virtual server, or other circuits suitable for executing instructions or performing logic operations. The instructions executed by at least one processor may, for example, be pre-loaded into a memory integrated with or embedded into the controller or may be stored in a separate memory.

In some embodiments, the at least one processor may include more than one processor. Each processor may have a similar construction, or the processors may be of differing constructions that are electrically connected or disconnected from each other. For example, the processors may be separate circuits or integrated in a single circuit. When more than one processor is used, the processors may be configured to operate independently or collaboratively. The processors may be coupled electrically, magnetically, optically, acoustically, mechanically or by other means that permit them to interact.

Embodiments consistent with the present disclosure may involve a network (e.g., network 120). A network may constitute any type of physical or wireless computer networking arrangement used to exchange data. For example, a network may be the Internet, a private data network, a virtual private network using a public network, a Wi-Fi network, a local area network ("LAN"), a wide area network ("WAN"), and/or other suitable connections that may enable information exchange among various components of the system. In some embodiments, a network may include one or more physical links used to exchange data, such as Ethernet, coaxial cables, twisted pair cables, fiber optics, or any other suitable physical medium for exchanging data. A network may also include one or more networks, such as a private network, a public switched telephone network ("PSTN"), the Internet, and/or a wireless cellular network. A network may be a secured network or unsecured network. In other embodiments, one or more components of the system may communicate directly through a dedicated communication network. Direct communications may use any suitable technologies, including, for example, BLUETOOTH^{™}, BLUETOOTH LE^{™} (BLE), Wi-Fi, near field communications (NFC), or other suitable communication methods that provide a medium for exchanging data and/or information between separate entities.

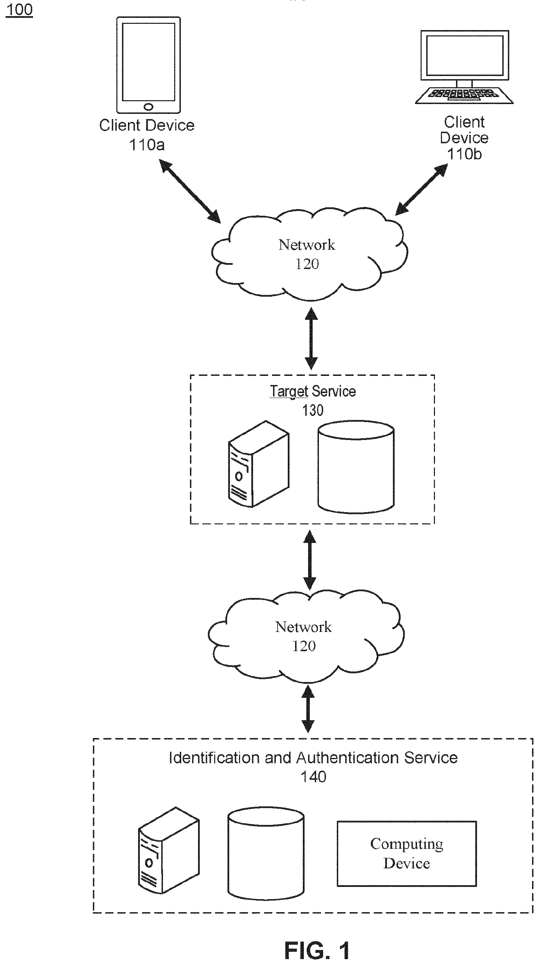

FIG. 1 illustrates an example network environment 100, according to embodiments of the present disclosure. As shown in FIG. 1, environment 100 may include one or more client devices 110a and 110b, a network 120, a target service 130, and an identification and authentication service 140. Network 120 may be or include any electronic communication channel, such as the Internet, a local or wide area network, Wi-Fi, or BLUETOOTH^{™}, as explained above.

Environment 100 of FIG. 1 may be used to analyze software applications. "Software," "software application," or "application" as used herein may refer broadly to any type of electronic instruction, whether commonly known as software, firmware, middleware, microcode, hardware description language, or otherwise. Examples of application include serverless code instances, scripts, and programs. Applications may comprise one or more source code instructions written in a software application language that may be translated into executable, binary, or any other machine-readable code. Examples of software application languages include Python, JavaScript, Java, C, C++, C#, Ruby, although a software application may be written in any other language or format.

A client device (e.g., client devices 110a and 110b) may be, for example, a smart phone, a mobile phone, a laptop, a tablet computer, a wearable computing device, a personal computer (PC), a smart television, and the like. A client device may contain and execute one or more software applications, the identification and authentication of which may be desired. The identification and authentication of a software application is explained in further detail herein. Client devices 110a and 110b may be communicatively coupled with target service 130 and/or identification and authentication service 140 via network 120. A client device may be configured to send and receive data requests and information from target service 130 and/or identification and authentication service 140. For example, a client device may transmit a data request in the form of an Application Programming Interface (API) request to target service 130, which may be a service for providing a data resource through a data request. Target service 130 may subsequently analyze and authenticate the API request and transmit one or more resources associated with the API request, such an object (e.g., a JavaScript Object Notation (JSON) object), a file (e.g., an image, audio, or video file), or any other type of data. Further, a client device may send to and receive any suitable information from identification and authentication service 140, which may be a service to authenticate client devices and/or software applications. For example, a client device may send data or metadata associated with one or more software applications contained therein, so as to identify and authenticate the same. Similarly, a client device may send usage statistics, performance data, or any other data that may be analyzed by identification and authentication service 140 to determine whether a software application in the client device has been maliciously altered or cannot be authenticated. In such cases, identification and authentication service 140 may alert the client device of a risk using network 120, such as via an electronic alert (e.g., through a software application), an email service, a short message service (SMS), or any other suitable manner.

As shown in FIG. 1, target service 130 may comprise one or more servers and/or one or more databases used to process and store electronic information, such as requests to and from client devices 110a and 110b and associated resources. Target service 130 may also be communicatively coupled with identification and authentication service 140 via network 120, which may likewise comprise one or more servers and one or more databases used to process and store electronic information. Identification and authentication service 140 may also include a computing device for performing steps and functions further described herein, which may be part of one of its servers and/or a separate component (e.g., a component inside client devices 110a and 110b and/or target service 130). Target service 130 and identification and authentication service 140 may exchange any data or information. For example, target service 130 may transmit a client device's API call sequence and/or timing information for a plurality of requests to identification and authentication service 140. Identification and authentication service 140 may analyze this data to determine whether the client device's software application is benign or whether it should be flagged as malicious or potentially malicious, as further explained herein. Identification and authentication service 140 may subsequently transmit an alert to target service 130 and/or the client device based on the result.

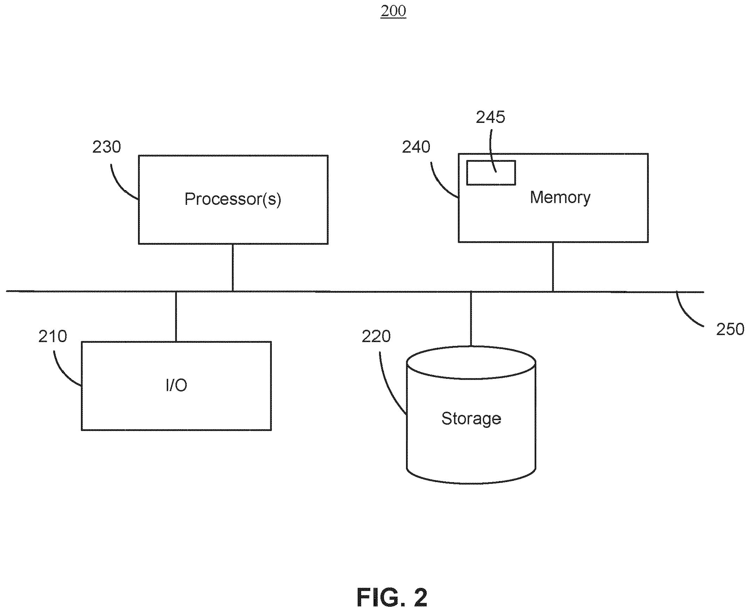

FIG. 2 illustrates an example computing device 200 for analyzing software applications, consistent with embodiments of the present disclosure. Computing device 200 may be part of identification and authentication service 140 of FIG. 1, or it may be a separate component (e.g., a component inside a client device or a target service). It is to be understood that in some embodiments the computing device may include multiple sub-systems, such as cloud computing systems, servers, and/or any other suitable components for analyzing software applications.

As shown in FIG. 2, computing device 200 may include one or more processor(s) 230, which may include, for example, one or more integrated circuits (IC), including application-specific integrated circuit (ASIC), microchips, microcontrollers, microprocessors, all or part of a central processing unit (CPU), graphics processing unit (GPU), digital signal processor (DSP), field-programmable gate array (FPGA), server, virtual server, or other circuits suitable for executing instructions or performing logic operations, as noted above. In some embodiments, processor(s) 230 may include, or may be a component of, a larger processing unit implemented with one or more processors. The one or more processors 230 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

As further shown in FIG. 2, processor(s) 230 may be communicatively connected via a bus or network 250 to a memory 240. Bus or network 250 may be adapted to communicate data and other forms of information. Memory 240 may include a memory portion 245 that contains instructions that when executed by the processor(s) 230, perform the operations and methods described in more detail herein. Memory 240 may also be used as a working memory for processor(s) 230, a temporary storage, and other memory or storage roles, as the case may be. By way example, memory 240 may be a volatile memory such as, but not limited to, random access memory (RAM), or non-volatile memory (NVM), such as, but not limited to, flash memory.

Processor(s) 230 may also be communicatively connected via bus or network 250 to one or more I/O device 210. I/O device 210 may include any type of input and/or output device or periphery device. I/O device 210 may include one or more network interface cards, APIs, data ports, and/or other components for supporting connectivity with processor(s) 230 via network 250.

As further shown in FIG. 2, processor(s) 230 and the other components (210, 240) of computing device 200 may be communicatively connected to a database or storage device 220. Storage device 220 may electronically store data in an organized format, structure, or set of files. Storage device 220 may include a database management system to facilitate data storage and retrieval. While illustrated in FIG. 2 as a single device, it is to be understood that storage device 220 may include multiple devices either collocated or distributed. In some embodiments, storage device 220 may be implemented on a remote network, such as a cloud storage. Processor(s) 230 and/or memory 240 may also include machine-readable media for storing software or sets of instructions. The instructions, when executed by one or more processors 230, may cause the processor(s) to perform the various operations and functions described in further detail herein.

Implementations of computing device 200 are not limited to the example embodiment shown in FIG. 2. The number and arrangement of components (210, 220, 230, 240) may be modified and rearranged. Further, while not shown in FIG. 2, computing device 200 may be in electronic communication with other network(s), including the Internet, a local area network, a wide area network, a metro area network, and other networks capable of enabling communication between the elements of the computing architecture. Also, computing device 200 may retrieve data or other information described herein from any source, including storage device 220 as well as from network(s) or other database(s).

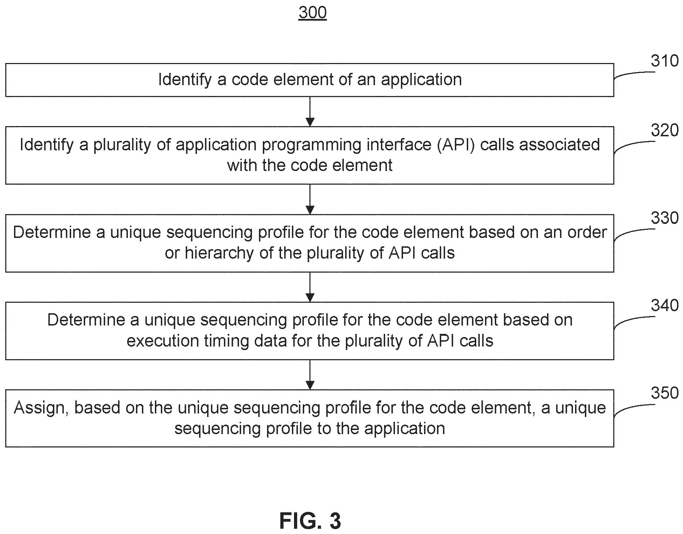

FIG. 3 illustrates an example method 300 for generating unique sequencing profiles for applications, consistent with embodiments of the present disclosure. The example method 300 may be implemented with at least one processor (e.g., the at least one processor of the computing device in FIG. 1 or processor(s) 230 in FIG. 2). It will be appreciated that method 300 is a non-limiting example. As shown in FIG. 3, at step 310 the at least one processor may identify a code element of an application. A "code element," as used herein, may refer to one or more machine-readable instructions that may be executed to perform one or more functions. Code elements may be expressed in any suitable format, including programming language instructions (e.g., Python, JavaScript, Java, C, C++, C#, Ruby, etc.), assembly code, and binary machine code. In some embodiments, a code element may include one or more API calls. An "API call," as used herein refers broadly to any request, response, message, or exchange of data between two or more computer systems, such as between client and server, or any combination of backend, middleware, and frontend components. Example API calls include calls related to read functions, write functions, delete functions, get/fetch functions, post functions, update functions, upload functions, download functions, functions to add or remove objects, start instances, stop or terminate instances, authentication functions, custom functions, or any other function as would be appreciated by those having ordinary skill in the art.

A code element may be identified using any suitable algorithm or process. A code element may be identified, for example, by detecting a functionality associated with a software application. In such cases, a code element may be identified by detecting a discrete output resulting from the execution of one or more portions of an application, such as a data request, a request response, a resource, a file, a calculation, or any other generated data. A code element may also be identified by a user or through any process for selecting or detecting a specific portion of code of a software application. For example, a code element may be selected by a user (e.g., by manually selecting a portion of code for analysis), based on a predetermined rule or criteria (e.g., based on the frequency of a code's execution), and/or randomly (e.g., using a randomized selection algorithm). Any suitable process for identifying a code element may be used, and the examples herein are illustrative only.

At step 320, the at least one processor may identify a plurality of API calls associated with the code element. The plurality of API calls may be identified, for example, by detecting API requests, API responses, exchanged files or data, client or user history, usage data, statistics, or any other information associated with the execution of the code element. In some embodiments, the plurality of API calls may be identified based on static analysis of the code element. For example, API requests and/or responses may be analyzed and identified by the at least one processor directly, such as when the at least one processor is integrated into a device executing the identified code element or when the source code is otherwise made available to the at least one processor. Additionally, in some embodiments, the plurality of API calls may be identified based on dynamic analysis of the code element. For example, the plurality of API calls may be identified through usage or monitoring data, such as when a client device provides execution or performance information to an identification and authentication service, or when the target service receiving the API calls provides such information to the identification and authentication service. Further, API calls may be recorded and provided to the at least one processor for analysis either in real-time or at a future time. Any other suitable process for identifying a plurality of API calls may be used, however, and the examples herein are illustrative only.

Subsequently, the at least one processor may determine a unique sequencing profile for the code element. A "sequencing profile," as used herein, may refer to a representation of a code element's functional sequence. For example, a sequencing profile may represent a collection of functions (e.g., API calls) arranged based on any information associated therewith (e.g., the executed functions, execution time, response time, resulting files or data, output, etc.). Accordingly, in some embodiments, as shown in step 330, the at least one processor may determine a unique sequencing profile based on an order or hierarchy of the plurality of API calls. In such embodiments, any order or hierarchy may be used to determine a unique sequencing profile, including orders based on the order in which the API calls are executed, the length of time to execute each API call, the length of time to receive a response for each API call, the amount of data received as a result of each API call, predefined orders or hierarchies, random orders or hierarchies, a combination thereof, or any other desired order or hierarchy. Further, in some embodiments, as shown in step 340, the at least one processor may determine a unique sequencing profile based on execution timing data (such as execution time length) for the plurality of API calls. The timing data may correspond to any time-based information of one or more API calls, such as the execution or response time of each individual API call, two or more API calls, or the entire code element. For example, in some embodiments, the execution timing data may indicate durations of execution for a plurality of API calls. As a further example, in some embodiments, the execution timing data may indicate durations in between execution for a plurality of API calls. It is to be understood that steps 330 and 340 are illustrative steps for determining a unique sequencing profile. Some embodiments may perform both steps 330 and 340, only step 330, only step 340, or neither step, to determine a unique sequencing profile for a code element.

At step 350, the at least one processor may assign, based on the unique sequencing profile for the code element, a unique sequencing profile to the application. A sequencing profile may be assigned to the application, for example, by saving a plurality of unique sequencing profiles for a plurality of code elements of the application in a suitable data structure (e.g., a table, object, etc.), and subsequently aggregating the plurality of unique sequencing profiles for the plurality of code elements into a singular sequencing profile for the application. In some embodiments, for example, the at least one processor may be configured to identify a plurality of code elements of the application. The plurality of code elements may overlap and need not be adjacent in time or execution sequence, but may rather be selected from any portion of the application. Subsequently, the at least one processor may determine unique sequencing profiles for each of the plurality of code elements. The determination may be based on any information associated with each code element (e.g., instructions, timing, order, etc.) as described herein, and in some embodiments may be based on two or more adjacent or non-adjacent code elements. The at least one processor may then assign, based on the unique sequencing profiles for each of the plurality of code elements, the unique sequencing profile to the application.

Further, in some embodiments, multiple unique sequencing profiles may be assigned to one or more code elements. For example, a first unique sequencing profile may be determined based on an order or hierarchy of the plurality of API calls, and a second unique sequencing profile may be determined based on execution timing data for the plurality of API calls. Consequently, an application may be assigned two unique sequencing profiles based on the first and second unique sequencing profiles for the code elements, respectively, or a single unique sequencing profile for the application may be generated by combining the first and second unique sequencing profiles for the code elements.

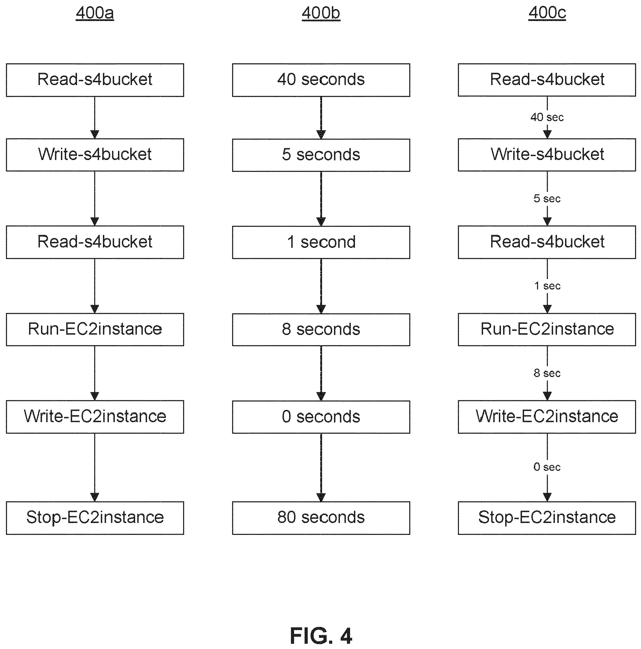

FIG. 4 illustrates exemplary sequencing profiles, consistent with embodiments of the present disclosure. It will be appreciated that FIG. 4 is a non-limiting example. As shown in FIG. 4, a sequence profile 400a/400b/400c may comprise any information associated with an application or code element, such as functions and/or timing information. As shown in exemplary sequence profile 400a, for example, a sequence profile may be generated based on an order or hierarchy of API calls. In the exemplary sequence profile 400a, a sequence of various functions is shown, such as a read function ("Read-s3bucket"), followed by a write function ("Write-s3bucket"), followed by another read function ("Read-s3bucket"), and so forth. The sequence may be, for example, chronological, although any other order or hierarchy may be used. Next, in exemplary sequence profile 400b, a sequence of times is shown, such as 30 seconds, followed by 5 seconds, followed by 1 second, and so forth. The timing information may represent any time data associated with an application or code element, such as execution timing, response times, delays, etc., as explained herein. Lastly, in exemplary sequence profile 400c, a sequence of both functions and timing data is shown. Accordingly, a sequence profile may be generated based on a single aspect or attribute of a code element, or a combination of two or more aspects or attributes, depending on the desired implementation and use. While the functions shown in connection with FIG. 4 are based on Amazon Web Services' (AWS) S3^{™} and EC2^{™} services, it is to be understood that this is a non-limiting example, and the embodiments described herein are not limited to any type of specific functions or service providers.

Using the unique sequencing profile for an application, the identification and authentication service 140 may uniquely distinguish and identify the application among a plurality of applications. In some embodiments, for example, identification and authentication service 140 may be configured to identify a plurality of applications in a network environment, and uniquely identify each of the plurality of applications based on their unique sequencing profile. The network environment may include one or more client devices, such as client devices 110a and 110b, in electronic communication with identification and authentication 140 through a network, as shown in FIG. 1. Further, the network environment may include a plurality of other electronic services, such as target service 130, that may exchange electronic data with the client devices and/or identification and authentication service 140. Each client device may include one or more applications running therein that may be identified using a unique sequencing profile as described herein.

In some embodiments, identification and authentication service 140 may store the unique sequencing profile assigned to the application for future analysis. A unique sequencing profile may be stored in any suitable data structure, such as a table, object, array, linked list, stack, queue, hash table, tree, node, graph, or any other electronic structure. The data structure may be stored in any suitable manner, such as memory 240 of FIG. 2, including in local memory, a database, on a cloud storage, on a remote server, or any other electronic medium for storage.

In some embodiments, identification and authentication service 140 may determine a security score for an application. A "security score," as used herein, may refer to a degree or likelihood that the integrity or functionality of an application or a portion thereof has been compromised. For example, a security score may indicate that the application is an authentic version. As another example, a security score may indicate a change in the application from a previous or different version. As a further example, a security score may indicate a level of potential maliciousness of the application, such as a risk that a bad actor has maliciously altered the application or a portion thereof. As yet another example, a security score may indicate a confidence that the application performs its intended functionality. A security score may represent any other suitable information, depending on the specific application or context as would be appreciated by those having ordinary skill in the art. Further, a security score may be represented in any suitable format, such as a binary classification (e.g., "Benign" or "Flagged"), a plurality of categories (e.g., "Low Risk," "Moderate Risk," or "High Risk"), or a number (e.g., a security level ranging from 0 to 100, with 0 representing no risk and 100 representing an immediate risk), or any other desired format.

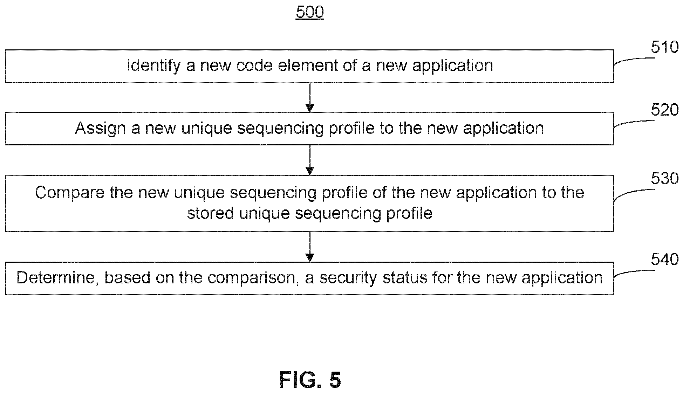

FIG. 5 illustrates an example method 500 for determining a security score for an application, consistent with embodiments of the present disclosure. The example method 500 may be implemented with at least one processor (e.g., the at least one processor of the computing device in FIG. 1 or processor(s) 230 in FIG. 2). It will be appreciated that method 500 is a non-limiting example. As shown in FIG. 5, at step 510 the at least one processor may identify a new code element of a new application. The code element may be identified in the same or similar manner as described above, such as by identifying a discrete portion or functionality of the new application.

At step 520, the at least one processor may assign a new unique sequencing profile to the new application. The new unique sequencing profile may be determined and assigned in the same or similar manner as described above, such as by determining a sequencing profile based on an order, hierarchy, or execution timing data of a plurality of API calls associated with the code element.

At step 530, the at least one processor may compare the new unique sequencing profile of the new application to a stored unique sequencing profile. The at least one processor may perform the comparison by retrieving from memory the stored unique sequencing profile for the application and determining a difference (if any) between the new and the retrieved unique sequencing profile. The type of comparison may depend on the format and contents of the unique sequencing profiles. For example, in embodiments where a sequencing profile is determined based on an order or hierarchy of a plurality of API calls, the order or hierarchy between the new and the stored unique sequencing profiles may be compared to determine a number of differences. Likewise, in embodiments where a sequencing profile is determined based on timing execution data for a plurality of API calls, the execution time between the new and the stored unique sequencing profiles may be compared.

At step 540, the at least one processor may determine, based on the comparison, a security score for the new application. For example, the similarity between the new and the stored unique sequencing profiles may be categorized using a binary security score classification, such as "Benign" when only trivial differences or no difference are identified, and "Flagged" when non-trivial differences are identified. As another example, the similarity between the new and the stored unique sequencing profiles may be categorized using one or more security score categories, such as "No Risk" when no differences are identified, "Low Risk" when the number of differences is within a low-risk threshold (e.g., more than a first number of differences are identified), "Medium Risk" when the number of differences is within a medium-risk threshold (e.g., more than a second number of differences are identified), and "High Risk" when the number of differences is within a high-risk threshold (e.g., more than a third number of differences are identified). Any threshold or other criteria may be used to determine a security score, however, as would be appreciated by those having ordinary skill in the art. Further, the classifications provided herein are illustrative only, and the disclosed embodiments are not limited to any particular example.

In some embodiments, after determining a security score for an application, identification and authentication service 140 may take a security action or operation and/or any other function. A "security action" or "security operation," as used herein, may refer to any function the execution of which depends on the determined security score, and which may involve operations designed to prevent, detect, assess, monitor, and/or respond to a determined security score or a change thereto. For example, a specific security action may be performed only when the determined security score indicates that an application's functionality or authentication is accurate. Conversely, a specific security action may be performed only when the determined security score indicates that the application's functionality or authentication is compromised. In some embodiments, the security action may be performed in real time, such as during or immediately following the application analysis described herein. In other embodiments, the security action may be performed at a later time, such as following a user or administrator authorization or after any other event.

A security action performed by identification and authentication service 140 may include any desired functionality based on the determined security score. For example, identification and authentication service 140 may terminate the application or suspend execution of the application based on the determined security score. The application may be terminated by stopping the execution of all or some of its associated functions. The application may be suspended by preventing the execution of any of its functions indefinitely or for a predetermined time period. The termination or suspension may involve stopping, disabling, quarantining, uninstalling, and/or deleting the application or a portion thereof.

As another example, identification and authentication service 140 may authenticate or authorize the application based on the determined security score. Identification and authentication service 140 may, for example, determine that the application has not been altered and is therefore an authentic version when its security score indicates that it has not changed. Similarly, an application may be authorized to send, receive, and/or access one or more resources based on its security score.

As a further example, identification and authentication service 140 may monitor or audit the new application based on the determined security score. An application may be monitored as a result of being placed on a watchlist that may be periodically monitored by identification and authentication service 140 or a third-party service to ensure the application's functionality or integrity remain within acceptable levels. The application may be audited by performing a comprehensive analysis of the application's code to discover errors, security breaches, or to otherwise gather information that may be of interest.

As another example, identification and authentication service 140 may add or remove privileges of the new application based on the determined security score, or it may activate, deactivate, or otherwise change at least one credential associated with the application. In such embodiments, an application's access to resources, functionalities, or data may be dependent on the privilege(s) and/or credential(s) associated with the application. For example, an application that has been benign or low-risk for a predetermined amount of time, or the security score of which has decreased from a higher risk status to a lower risk status, may be granted access to more resources, actions, or data by adding one or more privileges and/or activating one or more credentials of the application. Conversely, an application that has been flagged may be granted less access to those same resources, functions, or data by removing one or more privileges and/or deactivating one or more credentials of the application.

As a further example, identification and authentication service 140 may generate and/or provide a report or an alert based on the determined security score. The report or alert may identify the application or be otherwise associated with the application. The report or alert may include any desired information, such as the name of the application, a process identifier (PID), a security identifier (SID), a user identifier (UID), a group identifier (GID), an internet protocol (IP) address, a client device name, or any other information associated with the application. Further, the report or alert may include information associated with the security score determination process or any other step described herein, such as the result of a threshold determination, actions taken as a result of the security score, recommended actions or steps in view of the security score, other possible status scores, statistics or usage information associated with the application or a client device, or any other suitable information. The report or alert may be transmitted through any suitable means, such as via a dedicated application, an email message, a text message, an instant message, a combination thereof, or any other electronic means. Further, the report or alert may be transmitted to any desired entity or device, such as a client device running the application, a third-party service associated with the client device or its owner, and/or a second client device associated with the owner of a compromised client device. In some embodiments, the report or alert may be displayed to a user, administrator, or third-party. A display device, such as an LCD, LED, or OLED display, an augmented reality display, or a virtual reality display, may be used.

As another example, identification and authentication service 140 may require the application to authenticate using an additional factor, also known as multi-factor authentication. A multi-factor authentication may involve a user or application successfully presenting two or more pieces of evidence (or factors) to an authentication service that verifies the accuracy of the presented evidence. A factor may include a user-controlled password, a one-time password, a randomly generated code, a personal identification number (PIN), a verification via email, a verification via text message, a verification via a third-party authenticator (e.g., Google Authenticator^{™}, Authy^{™}, Microsoft Authenticator^{™}, etc.), a combination thereof, or any other way of sufficiently proving the authenticity of the application. In some embodiments, following a successful multi-factor authentication, the application may be granted access to one or more resources, functions, operations, data, privileges, credentials, or any other data or functionality reserved for authenticated applications. It is to be understood that the above examples of security actions are illustrative only and are not intended to be exhaustive.

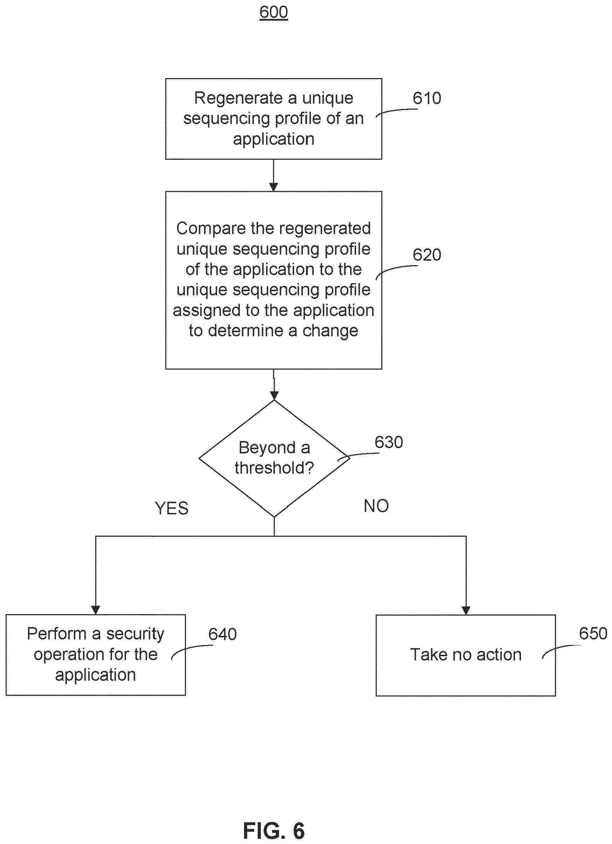

FIG. 6 illustrates an example method 600 for determining whether to perform a security operation, consistent with embodiments of the present disclosure. The example method 600 may be implemented with at least one processor (e.g., the at least one processor of the computing device in FIG. 1 or processor(s) 230 in FIG. 2). It will be appreciated that method 600 is a non-limiting example.

As shown in FIG. 6, at step 610 the at least one processor may regenerate a unique sequencing profile of an application. A unique sequencing profile may be regenerated by retrieving it from memory or otherwise making its information available, such as by retrieving it from local memory, a database, a cloud server, or any other electronic data storage, or by receiving it through a data request or through any other electronic means. In some embodiments, however, a unique sequencing profile may be regenerated by analyzing a previous version of the application or a portion thereof, which may likewise be retrieved from local memory, a database, a cloud server, or any other electronic data storage, or it may be received it through a data request or through any other electronic means.

At step 620, the at least one processor may compare the regenerated unique sequencing profile of the application to the unique sequencing profile assigned to the application to determine a change (if any). The type of comparison to determine the change may depend on the format and contents of the unique sequencing profiles, consistent with the discussion above. For example, in embodiments where a sequencing profile is determined based on an order or hierarchy of a plurality of API calls, the order or hierarchy between the regenerated and the new unique sequencing profiles may be compared to determine a number of differences. Likewise, in embodiments where a sequencing profile is determined based on timing execution data for a plurality of API calls, the execution time between the regenerated and the new unique sequencing profiles may be compared.

At step 630, the at least one processor may determine whether the change is beyond a threshold level. The threshold level may be based on any suitable criteria, such as a number of differences between the regenerated and the new unique sequencing profiles, the degree of difference in order, hierarchy, and/or timing between the regenerated and the new unique sequencing profiles, and/or any other information that may be used to distinguish the regenerated and the new unique sequencing profiles from one another.

At step 640, if the change is beyond the threshold level, the at least one processor may perform a security operation. The security operation may be any desired functionality based on the determined security score, as discussed above, such as terminating, suspending, authenticating, authorizing, monitoring, auditing, adding privileges, removing privileges, generating a report or an alert, or any other desired function.

At step 650, if the change is not beyond the threshold level, the at least one processor may take no action. In some embodiments, however, an action (including a security operation) may be performed even in cases when the change is not beyond the threshold level. For example, a warning report or alert may be generated detailing the above comparison, the threshold determination, and/or any other information. Any other desired action may be performed, however.

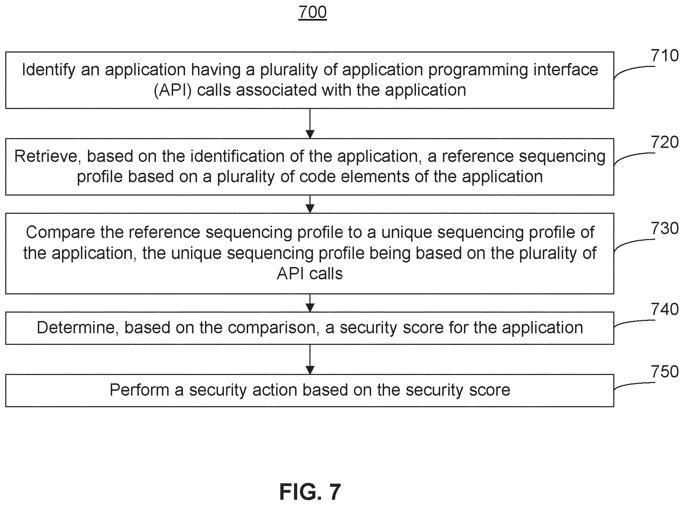

FIG. 7 illustrates an example method 700 for utilizing unique sequencing profiles that uniquely identify applications, consistent with embodiments of the present disclosure. The example method 700 may be implemented with at least one processor (e.g., the at least one processor of the computing device in FIG. 1 or processor(s) 230 in FIG. 2). It will be appreciated that method 700 is a non-limiting example. As shown in FIG. 7, at step 710 the at least one processor may identify an application having a plurality of API calls associated with the application. Further, an application may be identified using any information associated with it, including the name of the application, a process identifier (PID), a security identifier (SID), a user identifier (UID), a group identifier (GID), an internet protocol (IP) address, a client device name, or any other information associated with the application.

At step 720, the at least one processor may retrieve, based on the identification of the application, a reference sequencing profile based on a plurality of code elements of the application. In some embodiments, a reference sequencing profile may be associated with a version of the application. A reference sequencing profile may be retrieved from, for example, local memory, a database, a cloud server, or any other electronic data storage. Additionally, a reference sequencing profile may be received through a data request or through any other electronic means, or by otherwise accessing its information. In some embodiments, however, a reference sequencing profile may be retrieved by analyzing the application or a portion thereof, as explained herein.

At step 730, the at least one processor may compare the reference sequencing profile to a unique sequencing profile of the application, the unique sequencing profile being based on the plurality of API calls. The type of comparison may depend on the format and contents of the unique sequencing profiles, consistent with the discussion above. For example, in embodiments where a sequencing profile is determined based on an order or hierarchy of a plurality of API calls, the order or hierarchy between the regenerated and the new unique sequencing profiles may be compared to determine a number of differences. Likewise, in embodiments where a sequencing profile is determined based on timing execution data for a plurality of API calls, the execution time between the regenerated and the new unique sequencing profiles may be compared.

At step 740, the at least one processor may determine, based on the comparison, a security score for the application. For example, consistent with the disclosure above, the comparison between the reference sequencing profile and the unique sequencing profile may be categorized using a binary security score classification, such as "Benign" when only trivial differences or no difference are identified, and "Flagged" when non-trivial differences are identified. As another example, the comparison between the reference sequencing profile and the unique sequencing profile may be categorized using one or more security score categories, such as "Low Risk" when the number of differences is within a low-risk threshold (e.g., more than a first number of differences are identified), "Medium Risk" when the number of differences is within a medium-risk threshold (e.g., more than a second number of differences are identified), and "High Risk" when the number of differences is within a high-risk threshold (e.g., more than a third number of differences are identified). Any threshold or other criteria may be used to determine a security score, however, as would be appreciated by those having ordinary skill in the art.

At step 750, the at least one processor may perform a security action based on the security score. The security operation may be any desired functionality based on the determined security score, as discussed above, such as terminating, suspending, authenticating, authorizing, monitoring, auditing, adding privileges, removing privileges, generating a report or an alert, or any other desired function. In some embodiments, a threshold or any other criteria may be used to determine whether and/or what operation to perform based on the security score.

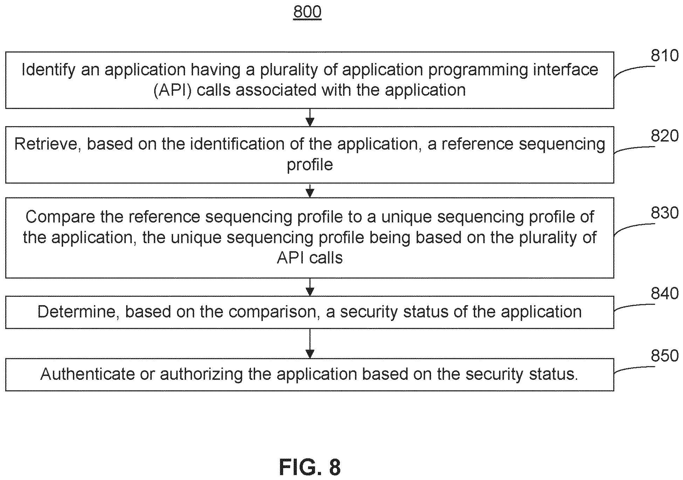

FIG. 8 illustrates another example method 800 for utilizing unique sequencing profiles that uniquely identify applications, consistent with embodiments of the present disclosure. The example method 800 may be implemented with at least one processor (e.g., the at least one processor of the computing device in FIG. 1 or processor(s) 230 in FIG. 2). It will be appreciated that method 800 is a non-limiting example. As shown in FIG. 8, at step 810 the at least one processor may identify an application having a plurality of API calls associated with the application. An application may be identified manually (e.g., by a user or administrator), automatically (e.g., by scanning applications in a client device), or a combination thereof. Further, an application may be identified using any information associated with it, including the name of the application, a process identifier (PID), a security identifier (SID), a user identifier (UID), a group identifier (GID), an internet protocol (IP) address, a client device name, or any other information associated with the application, as explained above.

At step 820 the at least one processor may retrieve, based on the identification of the application, a reference sequencing profile. The reference sequencing profile may be retrieved from, for example, local memory, a database, a cloud server, or any other electronic data storage, or it may be received through a data request or through any other electronic means, as explained above. Further, in some embodiments, a reference sequencing profile may be retrieved by analyzing the application or a portion thereof, as explained herein.

At step 830 the at least one processor may compare the reference sequencing profile to a unique sequencing profile of the application, the unique sequencing profile being based on the plurality of API calls. Consistent with the description above, the type of comparison may depend on the format and contents of the unique sequencing profiles, consistent with the discussion above. For example, in embodiments where a sequencing profile is determined based on an order or hierarchy of a plurality of API calls, the order or hierarchy between the regenerated and the new unique sequencing profiles may be compared to determine a number of differences. Likewise, in embodiments where a sequencing profile is determined based on timing execution data for a plurality of API calls, the execution time between the regenerated and the new unique sequencing profiles may be compared.

At step 840 the at least one processor may determine, based on the comparison, a security score of the application. For example, consistent with the disclosure above, the comparison between the reference sequencing profile and the unique sequencing profile may be categorized using a binary security score classification, such as "Benign" when only trivial differences or no difference are identified, and "Flagged" when non-trivial differences are identified. As another example, the comparison between the reference sequencing profile and the unique sequencing profile may be categorized using one or more security score categories, such as "Low Risk" when the number of differences is within a low-risk threshold (e.g., more than a first number of differences are identified), "Medium Risk" when the number of differences is within a medium-risk threshold (e.g., more than a second number of differences are identified), and "High Risk" when the number of differences is within a high-risk threshold (e.g., more than a third number of differences are identified).

At step 850 the at least one processor may authenticate or authorize the application based on the security score. The authentication or authorization may be based on a threshold or other criteria, as explained herein. Any action, such as a security action, may be performed based on the authentication or authorization. For example, the at least one processor may, based on the authenticating or authorizing of the application, execute the application and/or permit execution of the application. Any other action may be performed however, as explained above, including terminating, suspending, authenticating, authorizing, monitoring, auditing, adding privileges, removing privileges, generating a report or an alert, or any other desired function.

The diagrams and components in the figures described above illustrate the architecture, functionality, and operation of possible implementations of systems, methods, and computer hardware or software products according to various example embodiments of the present disclosure. For example, each block in a flowchart or diagram may represent a module, segment, or portion of code, which includes one or more executable instructions for implementing the specified logical functions. It should also be understood that in some alternative implementations, functions indicated in a block may occur out of order noted in the figures. By way of example, two blocks or steps shown in succession may be executed or implemented substantially concurrently, or two blocks or steps may sometimes be executed in reverse order, depending upon the functionality involved. Furthermore, some blocks or steps may be omitted. It should also be understood that each block or step of the diagrams, and combination of the blocks or steps, may be implemented by special purpose hardware-based systems that perform the specified functions or acts, or by combinations of special purpose hardware and computer instructions. Computer program products (e.g., software or program instructions) may also be implemented based on the described embodiments and illustrated examples.

It should be appreciated that the above-described systems and methods may be varied in many ways and that different features may be combined in different ways. In particular, not all the features shown above in a particular embodiment or implementation are necessary in every embodiment or implementation. Further combinations of the above features and implementations are also considered to be within the scope of the herein disclosed embodiments or implementations.

While certain embodiments and features of implementations have been described and illustrated herein, modifications, substitutions, changes and equivalents will be apparent to those skilled in the art. It is, therefore, to be understood that the appended claims are intended to cover all such modifications and changes that fall within the scope of the disclosed embodiments and features of the illustrated implementations. It should also be understood that the herein described embodiments have been presented by way of example only, not limitation, and various changes in form and details may be made. Any portion of the systems and/or methods described herein may be implemented in any combination, except mutually exclusive combinations. By way of example, the implementations described herein can include various combinations and/or sub-combinations of the functions, components and/or features of the different embodiments described.

Moreover, while illustrative embodiments have been described herein, the scope of the present disclosure includes any and all embodiments having equivalent elements, modifications, omissions, combinations (e.g., of aspects across various embodiments), adaptations or alterations based on the embodiments disclosed herein. Further, elements in the claims are to be interpreted broadly based on the language employed in the claims and not limited to examples described herein or during the prosecution of the present application. Instead, these examples are to be construed as non-exclusive. It is intended, therefore, that the specification and examples herein be considered as exemplary only, with a true scope being indicated by the following claims.

Also disclosed herein are the following clauses:
1. A computer readable medium including instructions that, when executed by at least one processor, cause the at least one processor to perform operations for generating unique sequencing profiles for applications, the operations comprising:
   identifying a code element of an application;
   identifying a plurality of application programming interface (API) calls associated with the code element;
   determining a unique sequencing profile for the code element, the unique sequencing profile being based on at least one of:
      an order or hierarchy of the plurality of API calls, or
      execution timing data for the plurality of API calls; and
   assigning, based on the unique sequencing profile for the code element, a unique sequencing profile to the application.
2. The computer readable medium of clause 1, wherein the operations further comprise:
   identifying a plurality of code elements of the application;
   determining unique sequencing profiles for each of the plurality of code elements; and
   assigning, based on the unique sequencing profiles for each of the plurality of code elements, the unique sequencing profile to the application.
3. The computer readable medium of clause 1 or 2, wherein the operations further comprise identifying a plurality of applications in a network environment, and uniquely identifying each of the plurality of applications based on their unique sequencing profile.
4. The computer readable medium of any of clauses 1 to 3, wherein the operations further comprise storing the unique sequencing profile assigned to the application for future analysis.
5. The computer readable medium of clause 4, wherein the operations further comprise:
   identifying a new code element of a new application;
   assigning a new unique sequencing profile to the new application;
   comparing the new unique sequencing profile of the new application to the stored unique sequencing profile; and
   determining, based on the comparison, a security score for the new application.
6. The computer readable medium of clause 5, wherein the operations further comprise performing, based on the determining, at least one of: terminating the new application or suspending execution of the new application.
7. The computer readable medium of clause 5 or 6, wherein the operations further comprise performing, based on the determining, at least one of: authenticating or authorizing the new application.
8. The computer readable medium of any of clauses 5 to 7, wherein the operations further comprise performing, based on the determining, at least one of: monitoring or auditing the new application.
9. The computer readable medium of any of clauses 5 to 8, wherein the operations further comprise performing, based on the determining, at least one of: adding or removing privileges of the new application.
10. The computer readable medium of any of clauses 5 to 9, wherein the operations further comprise performing, based on the determining, at least one of: generating a report or generating an alert identifying the new application.
11. A computer-implemented method for generating unique sequencing profiles for applications, the method comprising:
   identifying a code element of an application;
   identifying a plurality of application programming interface (API) calls associated with the code element;
   determining a unique sequencing profile for the code element, the unique sequencing profile being based on at least one of:
      an order or hierarchy of the plurality of API calls, or
      execution timing data for the plurality of API calls; and
   assigning, based on the unique sequencing profile for the code element, a unique sequencing profile to the application.
12. The computer-implemented method of clause 11, wherein the application is at least one of: a serverless code instance, a script, or a program.
13. The computer-implemented method of clause 11 or 12, wherein the plurality of API calls are identified based on static analysis of the code element.
14. The computer-implemented method of any of clauses 11 to 13, wherein the plurality of API calls are identified based on dynamic analysis of the code element.
15. The computer-implemented method of any of clauses 11 to 14, further comprising regenerating the unique sequencing profile of the application.
16. The computer-implemented method of clause 15, further comprising comparing the regenerated unique sequencing profile of the application to the unique sequencing profile assigned to the application.
17. The computer-implemented method of clause 16, further comprising determining whether there is a change beyond a threshold level based on the comparing.
18. The computer-implemented method of clause 17, further comprising performing a security operation for the application when the change is beyond the threshold level.
19. The computer-implemented method of any of clauses 11 to 18, wherein the execution timing data indicates durations of execution for the plurality of API calls.
20. The computer-implemented method of clauses 11 to 18, wherein the execution timing data indicates durations in between execution for the plurality of API calls.
21. A computer readable medium including instructions that, when executed by at least one processor, cause the at least one processor to perform operations for utilizing unique sequencing profiles that uniquely identify applications, the operations comprising:
   identifying an application having a plurality of application programming interface (API) calls associated with the application;
   retrieving, based on the identification of the application, a reference sequencing profile based on a plurality of code elements of the application;
   comparing the reference sequencing profile to a unique sequencing profile of the application, the unique sequencing profile being based on the plurality of API calls;
   determining, based on the comparison, a security score for the application; and
   performing a security action based on the security score.
22. The computer readable medium of clause 21, wherein the plurality of code elements each include one or more API calls of the plurality of API calls.
23. The computer readable medium of clause 22, wherein the unique sequencing profile of the application is based on at least one of:
   an order or hierarchy of the plurality of API calls, or
   execution timing data for the plurality of API calls.
24. The computer readable medium of any of clauses 21 to 23, wherein the security action is at least one of:
   display an alert associated with the application;
   authenticate the application;
   authorize the application;
   change at least one credential associated with the application;
   deactivate at least one credential associated with the application;
   require the application to authenticate using an additional factor;
   provide a report associated the application.
25. The computer readable medium of any of clause 21 to 24, wherein the security action is performed in real time.
26. The computer readable medium of clause 23, wherein comparing the reference sequencing profile to a unique sequencing profile of the application comprises comparing an order, hierarchy, or execution timing data of the reference sequencing profile to the order, hierarchy, or execution timing data of the unique sequencing profile of the application.
27. The computer readable medium of clause 23 or 26, wherein the execution timing data indicates durations of execution for the plurality of API calls.
28. The computer readable medium of clause 23, 26, or 27, wherein the execution timing data indicates durations in between execution for the plurality of API calls.
29. The computer readable medium of any of clauses 21 to 28, wherein the reference sequencing profile is associated with a version of the application.
30. The computer readable medium of any of clauses 21 to 29, wherein the operations further comprise determining, based on the security score, whether to require multi-factor authentication.
31. The computer readable medium of clause 30, wherein the authenticating or authorizing the application is further based on the multi-factor authentication.
32. A computer-implemented method for utilizing unique sequencing profiles that uniquely identify applications, the method comprising:
   identifying an application having a plurality of application programming interface (API) calls associated with the application;
   retrieving, based on the identification of the application, a reference sequencing profile;
   comparing the reference sequencing profile to a unique sequencing profile of the application, the unique sequencing profile being based on the plurality of API calls;
   determining, based on the comparison, a security score of the application; and
   authenticating or authorizing the application based on the security score.
33. The computer-implemented method of clause 32, wherein the application is at least one of: a serverless code instance, a script, or a program.
34. The computer-implemented method of clause 32 or 33, wherein the security score indicates that the application is an authentic version.
35. The computer-implemented method of any of clauses 32 to 34, further comprising determining, based on the comparison, that a difference between the reference sequencing profile and the unique sequencing profile of the application is below a threshold level.
36. The computer-implemented method of clause 35, wherein authenticating or authorizing the application is further based on the determination that the difference is below the threshold level.
37. The computer-implemented method of any of clauses 32 to 36, wherein the security score indicates at least one of: a change in the application or a level of potential maliciousness of the application.
38. The computer-implemented method of any of clauses 32 to 37, further comprising performing, based on the authenticating or authorizing of the application, at least one of: executing the application or permitting execution of the application.
39. The computer-implemented method of any of clauses 32 to 38, further comprising performing, based on the security score, at least one of: monitoring or auditing the application.
40. The computer-implemented method of any of clauses 32 to 39, further comprising performing, based on the security score, at least one of: generating a report or generating an alert identifying the application.
41. A computer-implemented method for utilizing unique sequencing profiles that uniquely identify applications, the method comprising:
   identifying an application having a plurality of application programming interface (API) calls associated with the application;
   retrieving, based on the identification of the application, a reference sequencing profile based on a plurality of code elements of the application;
   comparing the reference sequencing profile to a unique sequencing profile of the application, the unique sequencing profile being based on the plurality of API calls;
   determining, based on the comparison, a security score for the application; and
   performing a security action based on the security score.
42. The computer-implemented method of clause 41, wherein the plurality of code elements each include one or more API calls of the plurality of API calls.
43. The computer-implemented method of clause 42, wherein the unique sequencing profile of the application is based on at least one of:
   an order or hierarchy of the plurality of API calls, or
   execution timing data for the plurality of API calls.
44. The computer-implemented method of clause 43, wherein comparing the reference sequencing profile to a unique sequencing profile of the application comprises comparing an order, hierarchy, or execution timing data of the reference sequencing profile to the order, hierarchy, or execution timing data of the unique sequencing profile of the application.
45. The computer-implemented method of clause 43 or 44, wherein the execution timing data indicates: durations of execution for the plurality of API calls or durations in between execution for the plurality of API calls.
46. The computer-implemented method of any of clauses 41 to 45, wherein the security action comprises at least one of:
   displaying an alert associated with the application;
   authenticating the application;
   authorizing the application;
   changing at least one credential associated with the application;
   deactivating at least one credential associated with the application;
   requiring the application to authenticate using an additional factor;
   providing a report associated the application.
47. The computer-implemented method of clause 46, comprising performing, based on the authenticating or authorizing of the application, at least one of: executing the application or permitting execution of the application.
48. The computer-implemented method of any of clauses 41 to 47, comprising determining, based on the security score, whether to require multi-factor authentication.
49. The computer-implemented method of clause 48, wherein the security action comprises authenticating or authorizing the application based on the multi-factor authentication.
50. The computer-implemented method of any of clauses 41 to 49, comprising determining, based on the comparison, that a difference between the reference sequencing profile and the unique sequencing profile of the application is below a threshold level, wherein the security action comprises authenticating or authorizing the application based on the determination that the difference is below the threshold level.
51. The computer-implemented method of any of clauses 41 to 50, comprising performing, based on the security score, at least one of:
   monitoring the application,
   auditing the application,
   generating a report identifying the, or
   generating an alert identifying the application.
52. The computer-implemented method of any of clauses 41 to 51, wherein the security action is performed in real time.
53. The computer-implemented method of any of clauses 41 to 52,
   wherein the reference sequencing profile is associated with a version of the application, and/or
   wherein the application is at least one of: a serverless code instance, a script, or a program.
54. The computer-implemented method of any of clauses 41 to 53, wherein the security score indicates at least one of: a change in the application, a level of potential maliciousness of the application, or that the application is an authentic version.
55. A computer readable medium including instructions that, when executed by at least one processor of a computer system, cause the computer system to perform the method of any of clauses 41 to 54 for utilizing unique sequencing profiles that uniquely identify applications.
56. A computer-implemented method for utilizing unique sequencing profiles that uniquely identify applications, the method comprising:
   identifying an application to be authenticated or authorized, having a plurality of application programming interface (API) calls associated with the application;
   identifying, based on an execution of the identified application, the plurality of API calls associated with the application;
   retrieving, based on the plurality of API calls, a reference sequencing profile based on a plurality of code elements of the application;
   retrieving a unique sequencing profile of the application, the unique sequencing profile being based on the plurality of API calls;
   comparing the reference sequencing profile to the unique sequencing profile of the application;
   determining, based on the comparison, a security score indicating a change in the application; and
   performing a security action based on the security score.
57. The computer-implemented method of clause 56, wherein each the plurality of code elements of the application includes one or more API calls of the plurality of API calls.
58. The computer-implemented method of clause 57, wherein the unique sequencing profile of the application is based on at least one of:
   an order or hierarchy of the plurality of API calls, or
   execution timing data for the plurality of API calls.
59. The computer-implemented method of clause 58, wherein comparing the reference sequencing profile to a unique sequencing profile of the application comprises comparing an order, hierarchy, or execution timing data of the reference sequencing profile to the order, hierarchy, or execution timing data of the unique sequencing profile of the application.
60. The computer-implemented method of clause 58 or 59, wherein the execution timing data indicates: durations of execution for the plurality of API calls or durations in between execution for the plurality of API calls.
61. The computer-implemented method of any of clauses 56 to 60, wherein the security action comprises at least one of:
   displaying an alert associated with the application;
   authenticating the application;
   authorizing the application;
   changing at least one credential associated with the application;
   deactivating at least one credential associated with the application;
   requiring the application to authenticate using an additional factor;
   providing a report associated the application.
62. The computer-implemented method of clause 61, comprising performing, based on the authenticating or authorizing of the application, at least one of: executing the application or permitting execution of the application.
63. The computer-implemented method of any of clauses 56 to 62, comprising determining, based on the security score, whether to require multi-factor authentication.
64. The computer-implemented method of clause 63, wherein the security action comprises authenticating or authorizing the application based on the multi-factor authentication.
65. The computer-implemented method of any of clauses 56 to 64, comprising determining, based on the comparison, that a difference between the reference sequencing profile and the unique sequencing profile of the application is below a threshold level, wherein the security action comprises authenticating or authorizing the application based on the determination that the difference is below the threshold level.
66. The computer-implemented method of any of clauses 56 to 65, comprising performing, based on the security score, at least one of:
   monitoring the application,
   auditing the application,
   generating a report identifying the application, or
   generating an alert identifying the application.
67. The computer-implemented method of any of clauses 56 to 66, wherein the security action is performed in real time.
68. The computer-implemented method of any of clauses 56 to 67,
   wherein the reference sequencing profile is associated with a version of the application, and/or
   wherein the application is at least one of: a serverless code instance, a script, or a program.
69. The computer-implemented method of any of clauses 56 to 68, wherein the security score indicates at least one of: a change in the application, a level of potential maliciousness of the application, or that the application is an authentic version.
70. A computer readable medium including instructions that, when executed by at least one processor of a computer system, cause the computer system to perform the method of any of clauses 56 to 69 for utilizing unique sequencing profiles that uniquely identify applications.

## Claims

1. A computer-implemented method for generating unique sequencing profiles for applications, the method comprising:
identifying a code element of an application;
identifying a plurality of application programming interface, API, calls associated with the code element;
determining a unique sequencing profile for the code element, the unique sequencing profile being based on at least one of:
an order or hierarchy of the plurality of API calls, or
execution timing data for the plurality of API calls; and
assigning, based on the unique sequencing profile for the code element, a unique sequencing profile to the application.

2. The computer-implemented method of claim 1, comprising storing the unique sequencing profile assigned to the application for future analysis.

3. The computer-implemented method of claim 2, comprising:
identifying a new code element of a new application;
assigning a new unique sequencing profile to the new application;
comparing the new unique sequencing profile of the new application to the stored unique sequencing profile; and
determining, based on the comparison, a security score for the new application.

4. The computer-implemented method of claim 3, comprising:
performing, based on determining the security score, at least one of:
terminating the new application,
suspending execution of the new application,
adding privileges of the new application, or
removing privileges of the new application.

5. The computer-implemented method of claim 3 or 4, comprising:
performing, based on determining the security score, at least one of:
authenticating the new application,
authorizing the new application,
monitoring the new application, or
auditing the new application.

6. The computer-implemented method of any of claims 3 to 5, comprising:
performing, based on determining the security score, at least one of: generating a report or generating an alert identifying the new application.

7. The computer-implemented method of any of claims 1 to 6, comprising regenerating the unique sequencing profile of the application.

8. The computer-implemented method of claim 7, comprising:
comparing the regenerated unique sequencing profile of the application to the unique sequencing profile assigned to the application; and
determining whether there is a change beyond a threshold level based on the comparing.

9. The computer-implemented method of claim 8, comprising performing a security operation for the application when the change is beyond the threshold level.

10. The computer-implemented method of any of claims 1 to 9, comprising:
identifying a plurality of code elements of the application;
determining unique sequencing profiles for each of the plurality of code elements; and
assigning, based on the unique sequencing profiles for each of the plurality of code elements, the unique sequencing profile to the application.

11. The computer-implemented method of any of claims 1 to 10, comprising:
identifying a plurality of applications in a network environment; and
uniquely identifying each of the plurality of applications based on their unique sequencing profile.

12. The computer-implemented method of any of claims 1 to 11, wherein the execution timing data indicates: durations of execution for the plurality of API calls, or durations in between execution for the plurality of API calls.

13. The computer-implemented method of any of claims 1 to 12, wherein the plurality of API calls are identified based on at least one of: static analysis of the code element or dynamic analysis of the code element.

14. The computer-implemented method of any of claims 1 to 13, wherein the application is at least one of: a serverless code instance, a script, or a program.

15. A computer readable medium including instructions that, when executed by at least one processor of a computer system, cause the computer system to perform the method of any of claims 1 to 14 for generating unique sequencing profiles for applications.
